Europäisches Patentamt

European Patent Office

Office européen des brevets

(11) Publication number: **0 236 955 B1**

# EUROPEAN PATENT SPECIFICATION

(45) Date of publication of patent specification: **16.12.92** (51) Int. Cl.⁵: **G01L 5/10**

(21) Application number: **87103151.4**

(22) Date of filing: **05.03.87**

(54) **Method for cable installation.**

<div style="display: flex;">
<div>

(30) Priority: **10.03.86 NO 860879**

(43) Date of publication of application:
**16.09.87 Bulletin 87/38**

(45) Publication of the grant of the patent:
**16.12.92 Bulletin 92/51**

(84) Designated Contracting States:
**DE FR GB IT NL SE**

(56) References cited:
**DD-A- 95 708**
**DD-A- 210 975**
**FR-A- 2 099 774**
**GB-A- 1 422 946**
**GB-A- 2 136 582**

</div>
<div>

(73) Proprietor: **ALCATEL N.V.**
**Strawinskylaan 537 (World Trade Center)**
**NL-1077 XX Amsterdam(NL)**

(84) Designated Contracting States:
**FR GB**

(73) Proprietor: **STANDARD TELEFON OG KABEL-FABRIK A/S**
**Postboks 60 Okern**
**N-0506 Oslo 5(NO)**

(84) Designated Contracting States:
**DE IT NL SE**

(72) Inventor: **Friis, Brigt Lokke**
**Spireaveien 13D**
**N-0580 Oslo 5(NO)**

(74) Representative: **Graf, Georg Hugo, Dipl.-Ing. et al**
**Alcatel SEL AG Patent- und Lizenzwesen**
**Postfach 30 09 29**
**W-7000 Stuttgart 30(DE)**

</div>
</div>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method for continuously measuring the angle and the longitudinal strain at which the cable passes a guide wheel or pulley having a fixed axis placed in the bow or stern of the ship, during installation of a rigid, heavy electrical cable from a cable ship.

There are earlier known different devices for measuring such values. As to the strain measuring equipment the following references may be mentioned:

- UK Patent No. 743.862 which shows a cable holding, braking or winding arrangement comprising two pulleys mounted on a common rotatable carrier.
- German DAS No. 21.41.095 which concerns a cable paying out arrangement, having resilient members to compensate for sudden strain changes, and to indicate the cable strain.
- UK Patent No. 1.241.776 which shows a load indicator for mooring lines. Strain gauges are used to detect the strain forces, while the final strain is found by comparing the measured result with an ideal catenary line calculation.
- UK Patent No. 1.422.946 also relates to a mooring line system. Here the tension in several mooring ropes are measured an compared in a monitoring station which also may give a visual display of the result.

As for measuring devices for the inclination angle at which the cable leaves a vessel, no references are mentioned, but all known equipment include large mechanical arms which touch the cable and are guided by it.

All of the earlier techniques which are known by us, involve major deficiencies as e.g. being impractical in tough marine environments, being not reliable, being difficult to adjust, and the obtained precision is also much lower than desired.

There are also known a method and an apparatus for measuring the strain of ropes at fishing vessels (DD-A-95 708). This known apparatus contains a wheel which is free and independent movable in all directions. Such an apparatus is not useful for the installment of rigid, heavy sea cable. These cables have to be lead over a wheel with a fixed axle.

The object of the present invention is to provide a method according to which both the total cable stress and/or the inclination angle of the cable is found without use of complicated mechanical arrangements which are sensitive to variable field conditions.

A further object is to develop methods and/or means which allow compensation for influences from the accelerations of the ship on the measured values.

The method according to the present invention is described in claim 1.

To give a better and more unambiguous understanding of this invention, it is referred to the detailed description of some embodiments stated below, and to the accompanying drawings in which:

Fig.1      shows how the cable pay out/take up arrangement on board the vessel is built up in principle.

Fig. 2      shows the forces acting on the lay out/take up arrangement according to Fig. 1.

Fig. 3      shows by a simplified chart how the inclination angle a varies with the value of the relation between the components of the bearing forces.

Fig. 4      shows how an equipment according to the method invention is built up in principle.

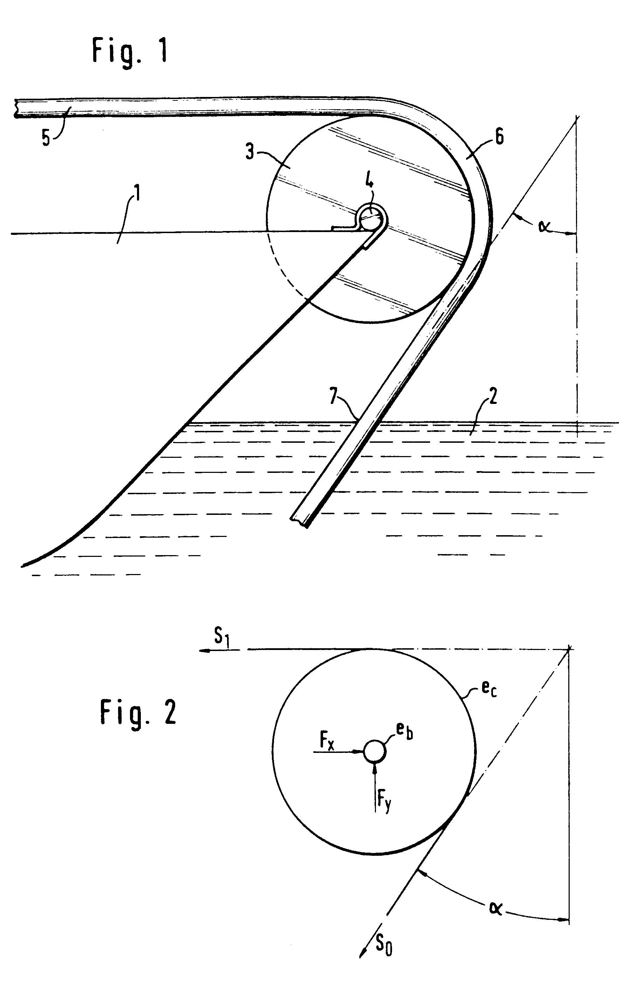

In Fig. 1 a front detail of the hull of a cable laying vessel 1 is shown situated on the sea 2 and whith a guiding wheel 3 fastened by means of a bearing arrangement 4 in the stem or the stern of the ship 1. A cable 5 which either is led to the sea or is brought up from the sea, or even is kept resting in a not movable position, is bent over the lay out wheel 3 at 6 and is finally entering the sea at point 7. And on the figure the inclination angle is shown whith the value $\alpha$. The total weight of the cable may be several thousands of kilograms if deep sea conditions is considered. The arrangement shown in Fig.1 does not show any details, as motors, brakes or pulleys, which are not required to obtain an understanding of the invention.

In Fig. 2 the forces and the geometry of the laying out equipment is shown still simpler, as no unnecessary details are shown. The forces $S_1$ and $S_0$ represent the stress in the cable itself, at each side of the wheel, respectively. The forces $F_x$ and $F_y$ represent the detected values of the bearing forces in x-, and y-direction respectively. The angle $\alpha$ again is the inclination angle, $e_b$ is the efficiency of the bearing 4 due to frictional losses in the bearing, and $e_c$ is the efficiency of the cable due to the internal frictional work which is required to bend the cable around the wheel 3. The losses are below included in the efficiency values, and the total efficiency $e_{tot}$ is used in the calculations as the sum of the above mentioned efficiency values. That is:

$$e_{tot} = e_b + e_c \qquad (eq.: 1)$$

If now the forces acting on the wheel are considered, and are assumed as being in equilibrium, and no acceleration of wheel, cable, or ship takes place, either as the cable is in rest, or as the velocity at which it moves is constant, the following conditions are obtained:

$$F_x = S_1 + S_0 . \sin \alpha \quad \text{(eq.: 2)}$$

$$F_y = S_0 . \cos \alpha \quad \text{(eq.: 3)}$$

And when equation 2 now is divided with equation 3, a new equation is obtained:

$$(F_x)/(F_y) = \{S_0(e_{tot} + \sin\alpha)\}/\{S_0 . \cos\alpha\} = (e_{tot})/(\cos \alpha) + \text{tg } \alpha \quad \text{(eq.: 4)}$$

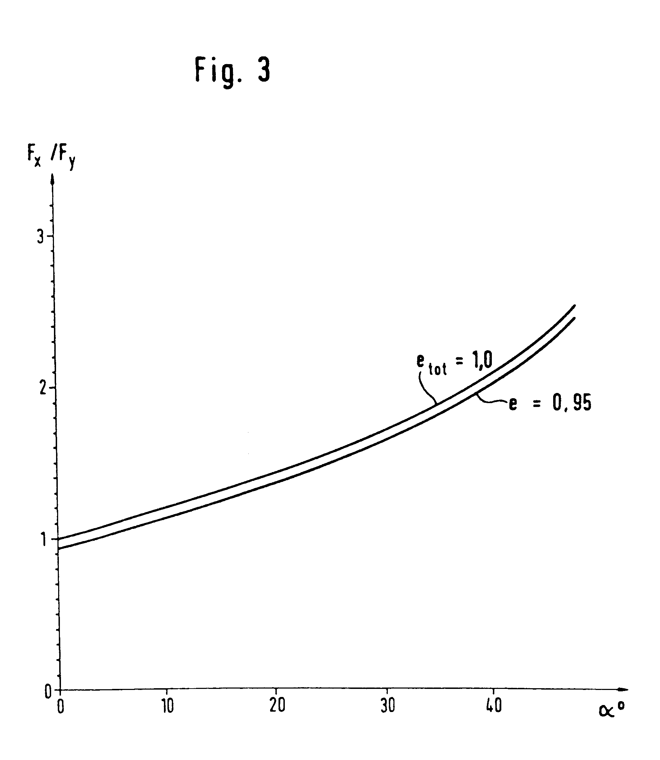

This new equation is graphically represented in Fig. 3, and is shown for two different values of the total efficiency in the system, namely $e_{tot} = 1,00$ and $e_{tot} = 0.95$ respectively.

As it would be understood from theese equations, there are different methods according to which the desired values may be evaluated depending of the parameters detected. The most direct method probably is to measure the inclination angle by means of a specific detector, and also to measure two components of the resulting bearing force directly e. g. by means of weighing cells, one for each component. Then both the mechanical stress $S_0$ in the cable at the sea level, and the exact value of the total efficiency of the system may be calculated from equations 4, and 2, or 3.

A different approach is to measure only the x and y components of the bearing forces, and to estimate, by empirical methods, a sensible value of the total efficiency deduced from the total losses, and from calculations which correspond to the diagram shown in Fig. 3 the value of the inclination angle $\alpha$ is determined. This will further lead to an easy calculation of $S_0$ by means of equation 2 or 3 above. And as the efficiency value $e_c$ is involved in the calculations, the influence from the cable stiffness on the bearing force components, is also considered in this rather simple calculation.

The above calculations are based on the assumption that stable conditions exist. That is, no accelerations are considered. Of course this is far from the truth, especially in marine environments where accelerations are expected in all and every directions. And accelerations of the ship, of the wheel, and of the cable itself will affect the measured bearing force components without affecting the cable stress in a similar manner. However it is not difficult to compensate for such acceleration forces, as they can be detected by means of accelerometers of known types, and signals from these meters may be introduced in the system, and errors may be compensated for. The most severe error will be caused by acceleration forces due to vertical acceleration of the rather heavy wheel 3, and the effect this may have on the measured component $F_y$. This may be compensated by a vertical accelerometer 17 arranged close to the wheel 3. The signals from this accelerometer may then be scaled in a proper manner, and added to the signal which represents the measured component $F_y$. Acceleration effects in other directions may be compensated for in a similar manner, but are normally not considered to be so important.

Normally the desired mechanically stress values are those which realy exist in the cable. Much of the intention of the invention is to detect the true stress conditions of the cable to ensure that it should not be overstressed and therefore subjected to damage.

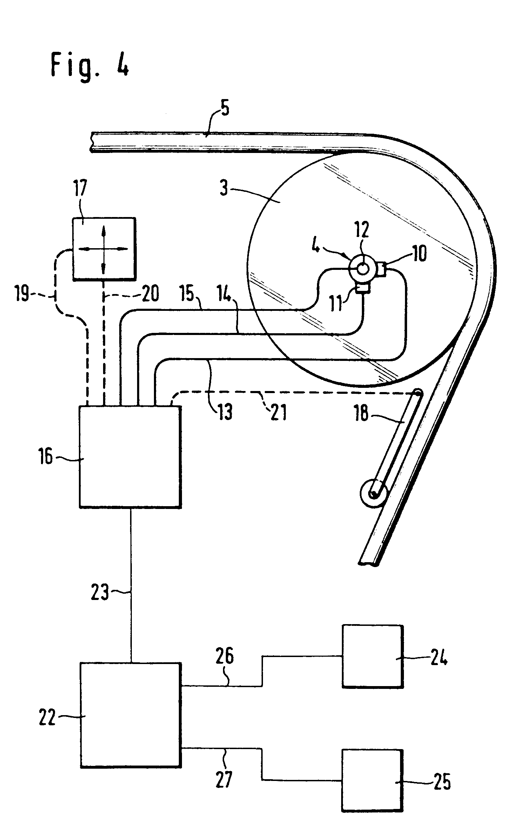

How the acceleration signals may be introduced in the system, is also shown in Fig. 4. In Fig. 4 the cable 5 is bent over the wheel 3, and in addition there is shown the necessary equipment to obtain the desired values from the detected variables.

In Fig. 4, the detectors 10 and 11 are weighing cells or similar detectors, e.g. of the strain gauge type, which continuously measure the orthogonal components of the resulting force which acts on the bearing 4. Then it is the total force which is measured, also including the wheight of the wheel 3, the weight of the cable portion which is bearing on the wheel, the effect from the bending of the cable, and all acceleration and retardation forces due to accelerations of the ship itself in all directions, and accelerations of the cable and the wheel, including accelerations of rotational character.

In addition a tachometer 12 may be used to determine the angular velocity and acceleration of the wheel 3. This tachometer 12 may be arranged at the center of the wheel, as shown, or may be arranged at the periphery, or on other places on the cable or the cable pulling equipment.

The signals provided from the three detectors 10, 11, and 12 are lead to an amplifier 16 via connections 13, 14, and 15 respectively.

As explained earlier on, there may also be introduced at least one accelerometer 17, which detects accelerations in at least one direction, and forwards signals representing the(se) acceleration(s) via connections 19 and 20 to the amplifier 16 mentioned above.

When the signals are amplified, they are led to the signal processor via a bus 23. Here the signals are converted to values which are adapted to be represented on the display unit 24 and the register unit 25 which are coupled to the signal processor 22 via connections 26 and 27.

In the figure there is also included an angle detector 18, which is shown as being in mechanical contact with the cable surface and gives a value for

the angle $\alpha$ (Fig. 1 or 2), and forward this to the amplifier 16 via the connector 21. As it is seen, the optional equipment is represented by dotted lines in the figure 4, while the equipment required to realize the present invention in its simplest form, is given in fully drawn lines.

According to the invention the values of the inclination angle and the cable stress at the surface of the sea, are not found directly by measuring the value of the stress and the angle as such, but indirectly by measuring the two different components of the resulting mechanical force which acts on the bearing of the wheel 3, and evaluating the desired values from these two readings.

If e.g. the horizontal and vertical components of the bearing force are measured, and these components are designated as $F_x$ which is the component of the bearing force in horizontal direction and $F_y$ which is the vertical component of the bearing force, the desired values, that is the inclination angle $\alpha$ and the cable stress $S_0$, respectively, both at sea level, are calculated from the measured values, as explained above.

The following parameters are involved in an equation needed for a more accurate calculation:

$e_b$ = Efficiency in bearing $\approx 0,998$

$e_c$ = Efficiency in cable during bending $90° \approx 0,99$

$S_0$ = Stress in cable at sea level

$S_1$ = Stress in cable beyond the wheel

$w_l$ = Rotational inertia of the wheel

$\omega_w$ = Rotational angular acceleration of the wheel

$m_w$ = Mass of the wheel

$a_w$ = acceleration of wheel

$m_c$ = mass of cable connected to the wheel

$a_c$ = acceleration of cable

And when the acceleration effects are included, the following equation is valid during a pay-out situation:

$S_0 - S_1$ = losses

$$S_0 = w_l.\omega_w + m_c.a_c + m_w.a_w + S_1/e_c.e_b \qquad (eq\ 5)$$

It is of course not required that the components to be measured are arranged in an orthogonal system of axis. Any measurements done in different directions will make up an unambiguous set of results. However it is not deemed to be necessary to describe other such methods, as the principle is unaltered while the mathematics become more complex.

As $e_c$ varies with $\alpha$, a minor mistake in the value of the inclination angle may arise, but as the efficiency will not vary considerably for a given equipment, the final value shall not be far from the correct one. As a matter of fact it is by calculation found that this influence on the final angular value shall not exceed $0.3°$. Therefore it shall in a practical solution normally not be required to take the variation of the factor $e_c$ with $\alpha$, into consideration.

When this method shall be used in practice, it is only required to build two sensors into the mechanical bearing, to take the registrations from these detectors to an arithmetic unit, e.g. a microprocessor which calculates the final values. Thus all types of complicated, mechanically equipment are avoided.

A measuring device according to this invention has as a major advantage a very high flexibility. Thus there may be included features which simplify the compensation of different error sources, and there exist a lot of them. E.g. there are the errors due to acceleration of the cable movements, the accelerations in different directions of the ship 1, and of the wheel 3, and variations in the values of the losses which may occur during the lay out or take up procedure. As an example it may be mentioned that the frictional losses in the cable itself, not only varies with the cable type, but also with the lay out angle, as the lay out angle determines the degree of bending of the cable, and the greater the bending, the greater the bending losses.

It should also be mentioned that very good results have been obtained in a test equipment by measuring only the values of the $F_x$ and the $F_y$ component of the resulting bearing force combined with an adjustment of the total efficiency $e_{tot}$ of the system in between the values 0.95 and 1.0. The calculated values of $S_0$ and $\alpha$ have then been found to be very close to the real values, i.e. whithin a $^+_-$ 1.0% limit.

The above description only represents a preferred embodiment. The invention may be varied within the scope of the invention as stated in the claims below. As modifications of the invention the following features may be mentioned:

The register unit 25 (Fig. 4), may be implemented by a printer which automatically delivers a print out of strain, angle of inclination, and length of cable paid out, at regular, but adjustable intervals, e.g. each 10 second, or each half minute.

If the ship is provided with an echosounder, the measuring arrangement according to the invention may be adapted to this echosounder so that also depth is registered at regular intervals.

It should also be considered that the measured values may be smoothened so that not the momentaneous values, but rather an average value is obtained for each interval. Such smoothening can easily be obtained by means of known electronic filtering of the signals representing the measured values or the calculated functions.

**Claims**

1. Method for, - during installation, paying out or taking up, of rigid, heavy electrical power cable (5) on a sea bed from a cable ship (1), - continuously measuring the angle ($\alpha$) and the longitudinal strain ($S_0$) at which the cable passes a guide wheel or pulley (3) having a fixed axis placed in the bow or stern of the ship, **characterized in that**
force components ($F_x$, $F_y$) which act directly upon the fixed axis (4) of the wheel in two different directions, are measured, and that for calculating the real strain ($S_0$) in the cable (5) when passing the guide wheel (3) there are continuously established values concerning the acceleration ($a_c$) of the cable and accelerations ($w_w, a_w$) of the guide wheel (3), parameters of the cable mass ($m_c$), of the guide wheel ($m_w$) and the rotational inertia of the wheel ($w_0$), as well as of the rigidity of the cable and of the frictional work caused by the bearings of the guide wheel and in the cable when it moves over the wheel, these measured values and established values being led to a computing unit (16,22) in which angular values and strain values are registered as a function of time or as a function of the position of the cable on the sea bed.

2. Method according to claim 1, where the horizontal and vertical strain components are measured in one vertical plane, the measured components are represented by the following equations:

$$F_x = S_1 + S_0 \sin \alpha$$
$$F_y = S_0 \cos \alpha$$

where $F_x$ is the bearing force component in horizontal
(x-) direction,
$F_y$ is the bearing force component in vertical (y-) direction,
$S_1$ is the strain in the cable above the wheel 3,
$S_0$ is the strain in the cable close to the surface of the sea, and
$\alpha$ is the inclination angle close to the surface of the sea and that the computing unit (16,22) comprises a microprocessor which from these equations and from estimated values of the losses calculates the strain ($S_0$) and the inclination angle ($\alpha$) of the cable (5).

3. Method according to claim 1 or 2, **characterized in that** from the established acceleration values ($w_w$, $a_c$, $a_w$) and the mass parameters ($m_w$, $m_c$) which affect the detected strain values, there are deduced compensating values, to be included in the measured results.

4. Method according to claim 1, 2 or 3, **characterized in that** from experienced values of frictional forces in the cable (5) and in the guide wheel, compensating values are deduced, to be included in the measured results.

**Patentansprüche**

1. Verfahren zum kontinuierlichen Messen des Winkels ($\alpha$) und der Längskraft ($S_0$), mit welcher das Kabel über ein am Bug oder Heck des Schiffes angeordnetes Führungsrad oder eine Riemenscheibe (3) läuft, während der Verlegung oder Aufnahme eines steifen, schweren elektrischen Energie-Seekabels von einem Kabelleger (1), **dadurch gekennzeichnet,** daß die Komponenten ($F_x$, $F_y$) der in zwei verschiedenen Richtungen direkt auf die feststehenden Achsen (4) des Rades (3) wirkenden Kraft gemessen werden und für die Berechnung der tatsächlichen Belastung ($S_0$) des Kabels beim Passieren des Rades (3) kontinuierlich Werte der Beschleunigung ($a_c$) des Kabels, der Beschleunigung ($\omega_w$, $a_w$) des Rades, Parameter der Kabelmasse ($m_c$), und des Rades ($m_w$), der Rotationsträgheit ($\omega_o$) des Rades sowie der Steifigkeit des Kabels und der von der Lagerung des Rades und in dem Kabel beim Lauf über das Rad verursachten Reibungsarbeit ermittelt werden, diese Werte einer Rechnereinheit (16,22) zugeführt werden, in welcher die Werte für Winkel und Längskraft in Abhängigkeit von der Zeit und der Lage des Kabels auf dem Meeresboden gespeichert werden.

2. Verfahren nach Anspruch 1, bei dem die horizontale und vertikale Zugkraftkomponenten in einer vertikalen Ebene gemessen werden, die gemessene Komponenten folgenden Gleichungen entsprechen:

$$F_x = S_1 + S_0 \sin\alpha$$
$$F_y = S_0 \cos\alpha$$

in welchen $F_x$ die Komponente der Lagerkraft in horizontaler (x-) Richtung ist,
$F_y$ die komponente der Lagerkraft in vertikaler (y-)Richtung ist,
$S_1$ die Zugspannung im Kabel oberhalb des Rades (3) ist,
$S_0$ die Zugspannung im Kabel nahe der Meeresoberfläche ist und
$\alpha$ der Neigungswinkel nahe der Meeresoberfläche ist,

und die Rechnereinheit (16, 22) einen Mikrocomputer enthält, welcher die Längskraft ($S_0$) und den Neigungswinkel ($\alpha$) des Kabels aus diesen Gleichungen und den geschätzten Werten für die Verluste berechnet.

3. Verfahren nach den Ansprüchen 1 und 2, dadurch gekennzeichnet, daß aus den festgesetzten Beschleunigungswerten ($\omega_w$, $a_c$, $a_w$) und den Parametern der Massen ($m_w$, $m_c$), welche die ermittelten Kraftwerte beeinflussen, Kompensationswerte abgeleitet werden, welche zusammen mit den Meßwerten ausgewertet werden.

4. Verfahren nach Anspruch 1, 2 oder 3, dadurch gekennzeichnet, daß von den experimentell ermittelten Werten der Reibungskräfte im Kabel (5) und dem Führungsrad Kompensationswerte abgeleitet werden, welche zusammen mit den Meßwerten ausgewertet werden.

**Revendications**

1. Procédé pour, durant l'installation, le dévidage ou le relevage d'un câble de puissance électrique (5) lourd et rigide au fond de la mer à partir d'un navire câblier (1), mesurer de façon continue l'angle ($\alpha$) et la tension longitudinale ($S_0$) avec lesquels le câble passe sur une roue ou poulie de guidage (3) ayant un axe fixe disposé à la proue ou la poupe du navire, **caractérisé en ce que** des composante de force ($F_x$, $F_y$) qui agissent directement sur l'axe fixe (4) de la roue dans deux directions différentes sont mesurées, et en ce que, pour calculer la tension réelle (S0) du câble (5) lorsqu'il passe la roue de guidage (3), on établit de façon continue des valeurs concernant l'accélération ($a_c$) du câble et des accélérations ($w_w$, $a_w$) de la roue de guidage (3), des paramètres de masse du câble ($m_c$), de la roue de guidage ($m_w$) et de l'inertie rotationnelle de la roue ($w_0$), de même que de la rigidité du câble et du travail de friction causé par le support de la roue de guidage et dans le câble lorsqu'il se déplace sur la roue, ces valeurs mesurées et ces valeurs établies étant fournies à une unité de calcul (16, 22) dans laquelle des valeurs angulaires et des valeurs de tension sont enregistrées en fonction du temps ou en fonction de la position du câble sur le fond de la mer.

2. Procédé conforme à la revendication 1, dans lequel des composantes horizontale et verticale de la tension sont mesurées dans un plan vertical, les composantes mesurées étant représentées par les équations suivantes :

$$F_x = S_1 + S_0 \sin\alpha$$
$$F_y = S_0 \cos\alpha$$

dans lesquelles
$F_x$ est la composante de la force d'appui dans la direction (x) et
$F_y$ est la composante de la force d'appui dans la direction (y)
$S_1$ est la tension du câble au-dessus de la roue 3
$S_0$ est la tension du câble près de la surface de la mer, et
$\alpha$ est l'angle d'inclinaison près de la surface de la mer,
l'unité de calcul (16,22) comprenant un microprocesseur calcule la tension ($S_0$) et l'angle d'inclinaison ($\alpha$) du câble (5), à partir de ces équations et de valeurs estimées des pertes.

3. Procédé conforme à la revendication 1 ou 2, caractérisé en ce que, à partir de valeurs d'accélération établies ($w_w$, $a_c$, $a_w$) et de paramètres de masse ($m_w$, $m_c$) qui affectent les valeurs de tension détectées, on déduit des valeurs de compensation devant être incluses dans les résultats de mesure.

4. Procédé conforme à la revendication 1, 2 ou 3, caractérisé en ce que, à partie de valeurs expérimentales des forces de friction dans le câble (5) et dans la roue de guidage, on déduit des valeurs de compensation devant être incluses dans les résultats de mesure.

Fig. 1

Fig. 2

# Fig. 3

# Fig. 4